# EUROPEAN PATENT APPLICATION

(11) **EP 4 841 433 A1**
(43) Date of publication of application: **18.11.2026**
(21) Application number: 25175837.1
(22) Date of filing: 12.05.2025
(51) Int. Cl.: G06F 9/4401, G06F 9/50

(54) **ELECTRONIC CONTROL UNIT FOR A VEHICLE, ELECTRONIC VEHICLE GUIDANCE SYSTEM, SENSOR SYSTEM METHOD FOR OPERATING AN ELECTRONIC CONTROL UNIT**

(71) Applicant: Connaught Electronics Ltd., County Galway H54 Y276 (IE)
(72) Inventor: Wong, Elvin, Tuam, H54 Y276 (IE)
(74) Representative: Jauregui Urbahn, Kristian

(57) **Abstract**

An electronic control unit (3) for a vehicle (1) comprises a first computing unit (4), a second computing unit (5), a memory device (7), and a switching circuit (6), which is connected to the first computing unit (4), to the second computing unit (5) and to the memory device (7). The first computing unit (4) is configured to carry out a first boot-up process and the switching circuit (6) is configured to grant the first computing unit (4) access to the memory device (7) during the first boot-up process. The first computing unit (4) is configured to control the switching circuit (6) to grant the second computing unit (5) access to the memory device (7) when the first boot-up process is finished.

## Description

The present disclosure relates to an electronic control unit for a vehicle, an electronic vehicle guidance system comprising such an electronic control unit, a sensor system comprising such an electronic control unit, and a method for operating an electronic control unit.

Electronic control units (ECUs) in modern vehicles often incorporate multiple computing units, for example SoCs, to handle various tasks and functions. These computing units typically require access to memory devices, such as flash memory, for example for boot-up processes.

One challenge in ECU design is balancing the need for dedicated memory access with cost and space constraints. Traditional approaches often involve providing separate memory devices for each computing unit, which can increase hardware complexity, power consumption, and overall system costs. This approach may also result in inefficient use of memory resources, as some computing units may only or predominantly require access to certain memory devices during specific phases of operation, such as during boot-up. This may lead to an underutilization of the memory devices.

It is an objective of the present invention to provide an improved concept for an ECU that overcomes said problems at least in part.

The invention is based on the idea to provide a switching circuit in an ECU with at least two computing units, the switching circuit connected to both computing units and to a memory device. The switching circuit is configured to grant the first computing unit access to the memory device during a first boot-up process of the first computing unit. When the first boot-up process is finished, the first computing unit controls the switching circuit to grant the second computing unit access to the memory device.

According to an aspect of the invention, an electronic control unit for a vehicle is provided. The electronic control unit includes a first computing unit, a second computing unit, a memory device, and a switching circuit, which is connected to the first computing unit, to the second computing unit and to the memory device. The first computing unit is configured to carry out a first boot-up process, in particular for booting-up the first computing unit, and the switching circuit is configured to grant the first computing unit access to the memory device during the first boot-up process. The first computing unit is configured to control the switching circuit to grant the second computing unit access to the memory device when the first boot-up process is finished.

This configuration allows for efficient sharing of a single memory device between two computing units, reducing hardware costs and complexity in the electronic control unit. The switching circuit acts as an intermediary managing access to the shared memory device based on the boot-up status of the first computing unit.

In particular, for controlling the switching circuit and, consequently, for controlling the access to the memory device, the first computing unit acts as a master device or primary controller and the second computing device acts as a slave device or secondary controller.

Some implementations may include one or more additional computing units of the electronic control unit sharing the same memory device through the switching circuit.

The electronic control unit's design according to the invention provides significant advantages in terms of cost reduction, space efficiency, and simplified hardware architecture in vehicle control systems, for example electronic vehicle guidance systems or sensor systems. By allowing two computing units to share a single memory device, it reduces the overall component count and potential points of failure.

This aspect of the invention solves the problem of redundant memory devices in multiprocessor vehicle control systems by providing a mechanism for shared memory access that does not compromise the boot-up processes or operational capabilities of either computing unit but also avoids or reduces underutilization of the memory device.

The switching circuit may also be denoted as multiplexing device or multiplexer. However, it is noted that the switching circuit does not necessarily select exactly one of two or more inputs to connect it to exactly one output.

In particular, the switching circuit comprises one or more first input terminals, two or more second input terminals, and one or more output terminals. The one or more first input terminals are connected to respective terminals of the first computing unit, the one or more second input terminals are connected to respective terminals of the second computing unit, and the one or more output terminals are connected to respective terminals of the memory device.

In particular, granting the first computing unit access to the memory device includes connecting the one or more first input terminals to the one or more output terminals and, for example, disconnecting the one or more second input terminals from the one or more output terminals. On the other hand, granting the second computing unit access to the memory device may include connecting the one or more second input terminals to the one or more output terminals and, for example, disconnecting the one or more first input terminals from the one or more output terminals.

For controlling the switching circuit, the first computing unit may, for example, provide a respective control signal to the switching circuit. The first computing unit may generate the control signal at a respective control terminal of the first computing unit, which is connected to a respective control terminal of the switching circuit.

In order to grant the first computing unit access to the memory device during the first boot-up process, the first computing unit may control the switching circuit accordingly, for example by means of the control signal. It is also possible, however, that a default setting of the switching circuit may be such that access to the memory device is granted to the first computing unit. This may be achieved, for example, by using one or more pull-up or pull-down resistors connected to the one or more first input terminals or by another technique.

According to several embodiments, the electronic control unit may comprise or consist of a flash memory device. In particular, the flash memory device may comprise or consist of an embedded multimedia card (eMMC) device.

The use of a flash memory, particularly an eMMC, provides high-speed data access and storage capabilities in a compact form factor, which is particularly advantageous in space-constrained vehicle environments.

Alternative memory technologies may also be employed, such as other types of nonvolatile memory or even volatile memory, in particular with appropriate data retention mechanisms.

According to several embodiments, the second computing unit may be configured to carry out a second boot-up process, in particular for booting-up the second computing device, when the switching circuit grants the second computing unit access to the memory device.

In particular, the second computing unit may carry out the second boot-up process when the first boot-up process is finished and, consequently, the first computing unit controls or has controlled the switching circuit to grant the second computing unit access to the memory device.

The ability for the second computing unit to perform its second boot-up process after the first computing unit has completed its first boot-up ensures efficient use of the shared memory resource without conflicts.

According to several embodiments, the electronic control unit may be configured to transmit an access request signal to the first computing unit, in particular to request access to the memory device, for example for carrying out the second boot-up process. The first computing unit may be configured to control the switching circuit to grant the second computing unit access to the memory device in response to the access request signal, in particular when the first boot-up process is finished.

Consequently, it is achieved that the first computing unit is informed about the requirement of the second computing unit to gain access to the memory device without delay. Also, it is avoided that the first computing unit controls the switching circuit to grant the second computing unit access to the memory device although it is not required.

This request-based access mechanism may also be used to ensure that the second computing unit can gain access to the memory device when needed, even after both units have completed their boot-up processes. It provides a flexible and dynamic way to manage shared resource access during ongoing operations.

The request-based access system provides an efficient means of resource sharing, minimizing conflicts and ensuring that each computing unit can access the memory device when required for critical operations.

According to several embodiments, the first computing unit may be configured to transmit a release request signal to the second computing unit while the switching circuit grants the second computing unit access to the memory device. The second computing unit may be configured to transmit a release response signal to the first computing unit in response to the release request signal. The first computing unit may be configured to control the switching circuit to grant the first computing unit access to the memory device in response to the release response signal.

In this way, a handshaking mechanism is established. This handshaking mechanism for memory access release ensures smooth transitions of memory access between the computing units, preventing data corruption or access conflicts. It allows for cooperative sharing of the memory device, with each unit able to request and relinquish control as needed.

An alternative approach could involve time-based sharing, where each computing unit is allocated specific time slots for memory access. However, the request-based system described here offers more flexibility to adapt to varying computational needs.

The release request and response system provides a robust method for managing shared resource access, ensuring data integrity and allowing each computing unit to complete critical operations before relinquishing control of the memory device.

According to several embodiments, the first computing unit may be configured to transmit a control signal to the switching circuit. The switching circuit may be configured to arbitrate access to the memory device between the first computing unit and the second computing unit depending on the control signal.

This control signal-based arbitration allows for dynamic management of memory access, with the first computing unit acting as the primary controller. It provides a centralized mechanism for coordinating access to the shared memory resource.

Alternative arbitration schemes could involve a more distributed approach where both computing units have equal control over the switching circuit, or the implementation of a separate arbitration unit to manage access requests.

The proposed control approach, however, simplifies the overall system architecture and reduces the potential for conflicts in access management, while still allowing for flexible and responsive allocation of the shared memory device.

According to several embodiments, the switching circuit may comprise a first data terminal connected to a data terminal of the first computing unit, in particular by a first data line, a second data terminal connected to a data terminal of the second computing unit, in particular by a second data line, and a data switch device, which is configured to arbitrate access to the memory device between the first data terminal and the second data terminal depending on the control signal. Alternatively or in addition, the switching circuit may comprise a first command terminal connected to a command terminal of the first computing unit, in particular by a first command line, a second command terminal connected to a command terminal of the second computing unit, in particular by a second command line, and command switch device, which is configured to arbitrate access to the memory device between the first command terminal and the second command terminal depending on the control signal.

This detailed structure of the switching circuit, with separate data and/or command switching capabilities, allows for fine-grained control over memory access. It enables the system to manage both data transfer and command issuance independently, providing greater flexibility and efficiency in memory operations.

In particular, the first data terminal and the first command terminal are comprised by the above-mentioned one or more first input terminals of the switching circuit. In particular, the second data terminal and the second command terminal are comprised by the above-mentioned one or more second input terminals of the switching circuit.

In particular, a data output terminal of the switching circuit may be connected to a data terminal of the memory device, in particular by a further data line, and/or a command output terminal of the switching circuit may be connected to a command terminal of the memory device, in particular by a further command line. The data output terminal and/or the command output terminal are, for example, comprised by the above-mentioned one or more output terminals of the switching circuit.

In particular, the first data line and/or the second data line and/or the further data line and/or the first command line and/or the second command line and/or the further command line may be bidirectional communication lines, respectively.

For example, the data switch device and/or the command switch device may be implemented as single-pole double-throw, SPDT, multiplexer switches.

According to several embodiments, the switching circuit may comprise a first clock terminal connected to a clock terminal of the first computing unit, in particular by a first clock line, a second clock terminal connected to a clock terminal of the second computing unit, in particular by a first clock line, and a clock switch device, which is configured to arbitrate access to the memory device between the first clock terminal and the second clock terminal depending on the control signal. In some embodiments, the clock switch device may be a glitch-free switch device.

The inclusion of the clock switch device, particularly a glitch-free one, ensures that clock signals are properly managed during transitions between computing units. This is particularly beneficial for maintaining data integrity and preventing timing-related errors in memory operations.

The glitch-free clock switch device provides a particularly robust solution for managing clock signals in a shared memory system, ensuring smooth transitions and reliable operation across different clock domains.

The glitch-free clock switch device may, for example, be implemented by means of standard logic gates.

In particular, the first clock terminal is comprised by the above-mentioned one or more first input terminals of the switching circuit. In particular, the second clock terminal is comprised by the above-mentioned one or more second input terminals of the switching circuit.

In particular, a clock output terminal of the switching circuit may be connected to a clock terminal of the memory device, in particular by a further clock line, and/or a command output terminal of the switching circuit may be connected to a command terminal of the memory device, in particular by a further command line. The data output terminal and/or the command output terminal are, for example, comprised by the above-mentioned one or more output terminals of the switching circuit.

In particular, the first clock line and/or the second clock line and/or the further clock line be unidirectional communication lines, respectively.

For example, the clock switch device may be implemented as a SPDT multiplexer switch.

According to several embodiments, the first computing unit may comprise or consist of a first system-on-a-chip and/or the second computing unit may comprise or consist of a second system-on-a-chip.

The use of system-on-a-chip (SoC) designs for the computing units allows for highly integrated and efficient processing capabilities within a compact form factor. This is particularly advantageous in space-constrained vehicle environments. The SoC-based design provides a high level of integration, potentially reducing power consumption and improving overall system reliability by minimizing the number of discrete components.

According to several embodiments, the switching circuit may consist of discrete logic circuitry.

Discrete logic circuitry offers simplicity and potentially lower cost.

According to several embodiments, the switching circuit may comprise or consist of at least one field-programmable gate array, FPGA, and/or the switching circuit may comprise or consist of at least one complex programmable logic device, CPLD.

These options for the switching circuit provide flexibility in design and manufacturing. FPGAs or CPLDs provide programmability and the ability to update or modify the switching logic after deployment.

According to another aspect of the invention, an electronic vehicle guidance system for a vehicle is provided. The system comprises an electronic control unit as described in the previous aspect. The first computing unit and/or the second computing unit is configured to generate at least one control signal for guiding the vehicle at least in part automatically and/or driver assistance information for assisting a driver of the vehicle at guiding the vehicle.

An electronic vehicle guidance system may be understood as an electronic system, configured to guide a vehicle in a fully automated or a fully autonomous manner and, in particular, without a manual intervention or control by a driver or user of the vehicle being necessary. The vehicle carries out all required functions, such as steering maneuvers, deceleration maneuvers and/or acceleration maneuvers as well as monitoring and recording the road traffic and corresponding reactions automatically. In particular, the electronic vehicle guidance system may implement a fully automatic or fully autonomous driving mode according to level 5 of the SAE J3016 classification. An electronic vehicle guidance system may also be implemented as an advanced driver assistance system, ADAS, assisting a driver for partially automatic or partially autonomous driving. In particular, the electronic vehicle guidance system may implement a partly automatic or partly autonomous driving mode according to levels 1 to 4 of the SAE J3016 classification. Here and in the following, SAE J3016 refers to the respective standard dated April 2021. Guiding the vehicle at least in part automatically may therefore comprise guiding the vehicle according to a fully automatic or fully autonomous driving mode according to level 5 of the SAE J3016 classification. Guiding the vehicle at least in part automatically may also comprise guiding the vehicle according to a partly automatic or partly autonomous driving mode according to levels 1 to 4 of the SAE J3016 classification.

The at least one control signal may for example be provided to one or more actuators of the vehicle, including for example one or more braking actuators and/or one or more steering actuators and/or one or more propulsion motors of the vehicle. The one or more actuators may affect a longitudinal and/or lateral control of the vehicle in order to guide the vehicle at least in part automatically based on the at least one control signal.

The driver assistance information may be output by means of an output device of the vehicle, for example a display and/or an audio output system and/or a haptic output system.

According to another aspect of the invention, a sensor system for a vehicle is provided. The sensor system comprises an electronic control unit as described in the previous aspect and at least one sensor device for the vehicle. The first computing unit and/or the second computing unit is configured to control the at least one sensor device and/or to process sensor data generated by the at least one sensor device.

According to another aspect of the invention, a method for operating an electronic control unit of a vehicle is provided. The method comprises booting up a first computing unit of the electronic control unit, wherein a switching circuit of the electronic control unit is used to grant the first computing unit access to a memory device of the electronic control unit during the booting-up. The switching circuit is controlled by the first computing unit to grant the second computing unit access to the memory device when the booting-up is finished.

Further embodiments of the method according to the invention follow directly from the various embodiments of the electronic control unit according to the invention and vice versa. In particular, individual features and corresponding explanations as well as advantages relating to the various embodiments of the electronic control unit according to the invention can be transferred analogously to corresponding embodiments of the method according to the invention. In particular, the electronic control unit according to the invention is designed or programmed to carry out the method according to the invention. In particular, the electronic control unit according to the invention carries out the method according to the invention.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, may also be comprised by the invention. Moreover, embodiments and combinations of features, which go beyond or deviate from the combinations of features set forth in the recitations of the claims may be comprised by the invention.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

In the figures,
- Fig. 1: is a schematic diagram of a vehicle with an exemplary embodiment of a sensor system in accordance with an aspect of the present disclosure;
- Fig. 2: is a block diagram of an exemplary embodiment of an electronic control unit with computing units and a switching circuit in accordance with an aspect of the present disclosure;
- Fig. 3: is a block diagram of a further exemplary embodiment of an electronic control unit in accordance with an aspect of the present disclosure; and
- Fig. 4: is a schematic circuit diagram of a clock switch device within a further exemplary embodiment of an electronic control unit in accordance with an aspect of the present disclosure.

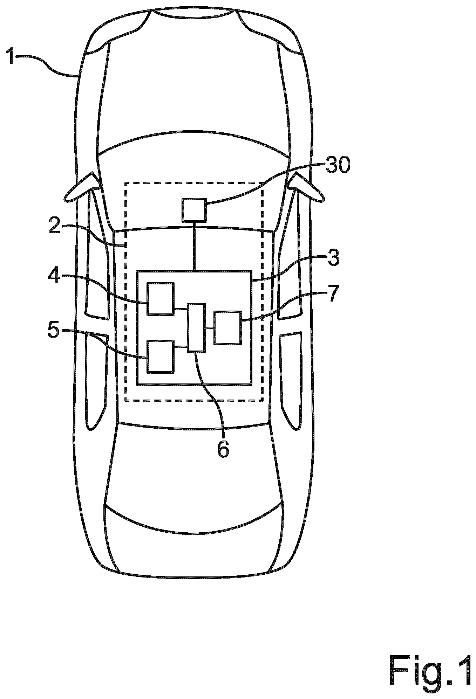

Fig. 1 shows schematically a vehicle 1, in particular a motor vehicle, for example a passenger car, comprising an electronic control unit 3 according to the invention. In other embodiments, the vehicle 1 may be a truck or a motorcycle et cetera.

The electronic control unit 3 comprises a first computing unit 4, a second computing unit 5, a memory device 7, and a switching circuit 6. The switching circuit 6 is connected to the first computing unit 4, the second computing unit 5, and the memory device 7.

In some embodiments, the electronic control unit 3 may be part of an electronic vehicle guidance system for the vehicle 1. The first computing unit 4 and/or the second computing unit 5 may be configured to generate at least one control signal for guiding the vehicle 1 at least in part automatically. Alternatively or in addition, the first computing unit 4 and/or the second computing unit 5 may generate driver assistance information for assisting a driver of the vehicle 1 in guiding the vehicle 1.

In some embodiments, as indicated in Fig. 1, the electronic control unit 3 may be part of a sensor system 2. The sensor system 2 may further include at least one sensor device 30, such as a camera, a radars system, a lidar system, an ultrasonic sensor system, an inertial measurement unit, a torque sensor et cetera. The first computing unit 4 and/or the second computing unit 5 may be configured to control the at least one sensor device 30 and/or process sensor data generated by the at least one sensor device 30.

The electronic control unit 3 utilizes a shared memory architecture, where the memory device 7 can generally be accessed by both the first computing unit 4 and the second computing unit 5 through the switching circuit 6. This architecture allows for efficient use of memory resources and facilitates data sharing between the computing units.

The first computing unit 4 is configured to carry out a first boot-up process and the switching circuit 6 is configured to grant the first computing unit 4 access to the memory device 7 during the first boot-up process. The first computing unit 4 is configured to control the switching circuit 6 to grant the second computing unit 5 access to the memory device 7 when the first boot-up process is finished.

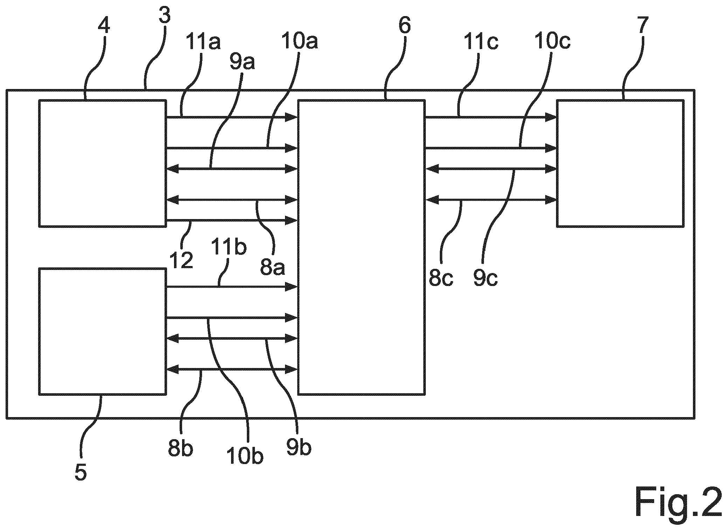

Fig. 2 illustrates a high-level architecture of the electronic control unit 3 in a further exemplary embodiment according to the invention, which is based on the embodiment of Fig. 1.

The first computing unit 4 may, for example, comprise or consist of a first system-on-a-chip. Similarly, the second computing unit 5 may, for example, comprise or consist of a second system-on-a-chip. The memory device 7 may, for example, comprise or consist of a flash memory device. In some examples, the flash memory device comprises or consists of an embedded multimedia card (eMMC) device.

The electronic control unit 3 may include a first data line 8a connecting a data terminal of the first computing unit 4 to a first data terminal of the switching circuit 6, a second data line 8b connecting a data terminal of the second computing unit 5 to a second data terminal of the switching circuit 6, and a third data line 8c connecting a third data terminal of switching circuit 6 to a data terminal of the memory device 7. The electronic control unit 3 may also include a first command line 9a connecting a command terminal of the first computing unit 4 to a first command terminal of the switching circuit 6, a second command line 9b connecting a command terminal of the second computing unit 5 to a second command terminal of the switching circuit 6, and a third command line 9c connecting a third command terminal of the switching circuit 6 to a command terminal of the memory device 7. Additionally, the electronic control unit 3 may include a first clock line 10a connecting a clock terminal of the first computing unit 4 to a first clock terminal of the switching circuit 6, a second clock line 10b connecting a clock terminal of the second computing unit 5 to a second clock terminal of the switching circuit 6, and a third clock line 10c connecting a third clock terminal of the switching circuit 6 to the memory device 7.

The electronic control unit 3 may further include a first reset line 11a connecting a reset terminal of the first computing unit 4 to a first reset terminal of the switching circuit 6, a second reset line 11b connect a reset terminal of the second computing unit 5 to a second reset terminal of the switching circuit 6, and a third reset line 11c connect a third reset terminal of the switching circuit 6 to a reset terminal of the memory device 7.

A control line 12 of the electronic control unit 3 connects a control terminal of the first computing unit 4 to a control terminal of the switching circuit 6.

The switching circuit 6 manages access to the shared memory device 7 between the first computing unit 4 and the second computing unit 5. During operation, for example, the first computing unit 4 carries out a first boot-up process. The switching circuit 6 grants the first computing unit 4 access to the memory device 7 during this first boot-up process.

When the first boot-up process is finished, the first computing unit 4 controls the switching circuit 6 to grant the second computing unit 5 access to the memory device 7. This control may be implemented through a control signal sent via the control line 12.

When the first computing unit 4 has access to the memory device 7, it may exchange commands with the memory device 7 via the first command line 9a and the third command line 9c and/or it may exchange data with the memory device 7 via the first data line 8a and the third data line 8c. Furthermore, the first computing unit 4 may provide a first clock signal to the memory device 7 via the first clock line 10a and the third clock line 10c. Furthermore, the first computing unit 4 may provide a first reset signal to the memory device 7 via the first reset line 11a and the third reset line 11c.

When second computing unit 5 has access to the memory device 7, it may exchange commands with the memory device 7 via the second command line 9b and the third command line 9c and/or it may exchange data with the memory device 7 via the first data line 8b and the third data line 8c. Furthermore, the second computing unit 4 may provide a second clock signal to the memory device 7 via the second clock line 10b and the third clock line 10c. Furthermore, the second computing unit 5 may provide a second reset signal to the memory device 7 via the second reset line 11b and the third reset line 11c.

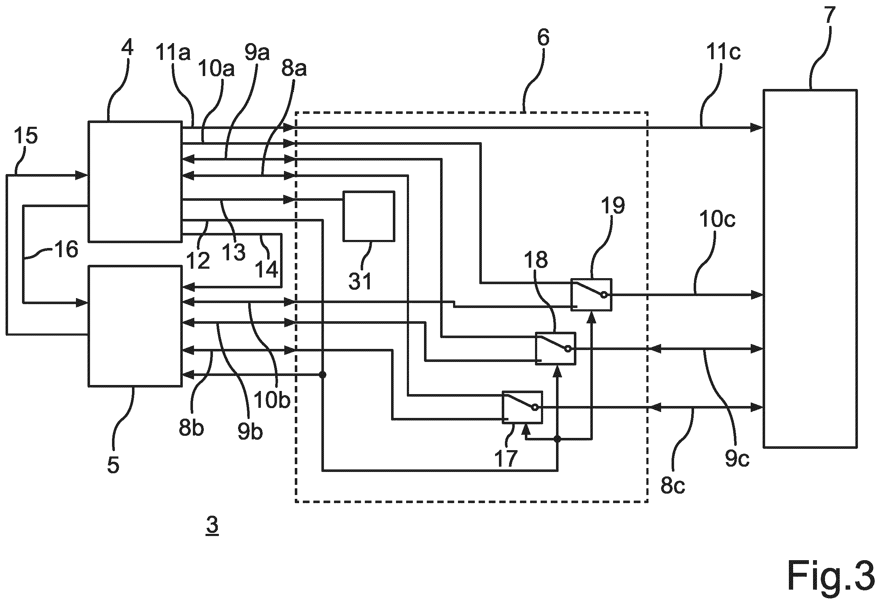

Fig. 3 illustrates a more detailed architecture of the electronic control unit 3 in a further exemplary embodiment according to the invention. The electronic control unit 3 is based on the embodiment of Fig. 2 without the second reset line 11b, however. The switching circuit 6 includes several components that facilitate the sharing of the memory device 7 between the first computing unit 4 and the second computing unit 5.

The switching circuit 6 comprises a data switch device 17, a command switch device 18, and a clock switch device 19. These switch devices 17, 18, 19 are configured to arbitrate access to the memory device 7 between the first computing unit 4 and the second computing unit 5. In particular, the data switch device 17 arbitrates access between the first data terminal of the switching circuit 6 and the second data terminal of the switching circuit 6 depending on the control signal. In particular, the command switch device 18 arbitrates access between the first command terminal of the switching circuit 6 and the second command terminal of the switching circuit 6 depending on the control signal. In particular, the clock switch device 19 arbitrates access between the first clock terminal of the switching circuit 6 and the second clock terminal of the switching circuit 6 depending on the control signal.

For example, the switching circuit 6 may comprise a reset unit 31, which is configured to reset the switching circuit 6 depending on the first reset signal.

The switch devices 17, 18, 19 may for example be implemented as SPDT multiplexer switches, in particular 10-channel multiplexer switches to manage the various signal lines 8a, 7b, 8c, 9a, 9b, 9c, 10a, 10b, 10c, 11a, 11b, 11c between the computing units 4, 5 and the memory device 7.

The first computing unit 4 may transmit the control signal via the control line 12 to the switching circuit 6. The control signal determines which computing unit 4, 5 has access to the memory device 7. The switching circuit 6 arbitrates access to the memory device 7 between the first computing unit 4 and the second computing unit 5 based on the control signal.

The control signal may for example default to logic High after a reset, which may be achieved by a respective pull-up resistor (not shown). This default state may, for example, grant initial access to the first computing unit 4.

The clock switch device 19 is, for example, designed as a glitch-free switch device. This design prevents undeterministic logic level latching that may occur due to asynchronous clock signals from the first computing unit 4 and the second computing unit 5.

In some embodiments, additional signal lines for managing the interaction between the computing units 4, 5 and the memory device 7 and/or for controlling the switching circuit 6 may be provided. A fourth reset line 13 may for example connect the first computing unit 4 to the switching circuit 6, allowing the first computing unit 4 to reset the switching circuit 6 via a switching device reset signal. A fifth reset line 14 may connect the first computing unit 4 to the second computing unit 5, enabling the first computing unit 4 to reset the second computing unit 5 via a computing unit reset signal.

To coordinate access requests between the computing units 4, 5, a first coordination line 15 and a second coordination line 16 may be provided, which connect the computing units 4, 5 to each other. These coordination lines 15, 16 allow the computing units 4, 5 to communicate their need for access to the memory device 7.

For example, when the electronic control unit 3 is powered on, the computing units 4, 5 and the switching device 6 may undergo a power-on reset. Then the computing units 4, 5 start to leave their reset states for booting up. By default the control signal at the control line 12 may be logic High after reset. Therefore, the first computing unit 4 can access the memory device 7 for boot-up purposes. At the same time, the second computing unit 5 may also try to boot-up. Since it does not have access at this time, it has to wait for the first computing unit 4 to complete its access.

Depending on the internal primary boot-up firmware in the second computing unit 5, the second computing unit 5 may, for example, try to access the memory device 7 without knowing that it cannot get access to it. Thus, the second computing unit 5 keeps sending commands, for example via the second command line 9b. Since the second command line 9b is currently disconnected from memory device 7, there is no feedback from the memory device 7 to the second computing unit 5. Since there is no effect to the memory device 7 for the first computing unit 4, this behavior of the second computing unit 5 in this situation is not a problem. However, depending on the firmware implementation of the first computing unit 4, this situation can also be prevented if the first computing unit 4 can put the second computing unit 5 into its reset state, for example via the fifth reset line 14.

Alternatively, the second computing unit 5 may notice that it can currently get no access and therefore wait for access being granted. In particular, the primary boot-up firmware of the second computing unit 5 is programmed to recognize the control signal at the control line 12 and uses the first coordination line 15 to request access. Therefore, when the primary boot firmware recognizes that the control signal is logic High, meaning that the first computing unit 4 is accessing the memory device 7, the second computing unit 5 may raise the signal at the first coordination line 15 to logic High to request access to the memory device 7 from the first computing unit 4. When the first computing unit 4 has booted-up, it checks the status of the first coordination line 15. If it is at logic High, the first computing unit 4 may perform necessary final accesses to the memory device 7, such as completing all necessary read and write operations and setting the memory device 7 to an idle state, for example. Then, the control signal at the control line 12 may be set to logic Low by the first computing unit 4. The second computing unit 5 monitors the control signal and if it transitions from logic High to logic Low that means that access to the memory device 7 is now granted to the second computing unit 5. In this situation, the second computing unit 5 can start accessing the memory device 7 for booting-up. When the access to the memory device 7 is granted to the second computing unit 5, the second computing unit 5 may set the signal at the first coordination line 15 to logic Low.

In case there is no further access request by the first computing unit 4 via the second coordination line 16, the second computing unit 5 may remain to access to the memory device 7. The second computing unit 5 may perform necessary final accesses to the memory device 7, such as completing all necessary read and write operations and setting the memory device 7 to the idle state. Then, the control signal may be set to logic High again by the first computing unit 4. On the other hand, if the first computing unit 4 needs to access the memory device 7 again, it may raise the signal at the second coordination line 16 to logic High, thereby asking the second computing unit 5 handing over access to the memory device 7. When the second computing unit 5 recognizes that the signal at the second coordination line 16 is High and the control signal at the control line 12 is logic Low, the second computing unit 5 may perform necessary final accesses to the eMMC device and then pull the signal at the first coordination line 15 to logic Low, signaling to the first computing unit 4 that the access is granted. When the first computing unit 4 recognizes that the signal at the first coordination line 15 is logic Low, it may set the control signal at the control line 12 to logic High to access to the memory device 7 and then set the signal at the second coordination line 16 to logic Low.

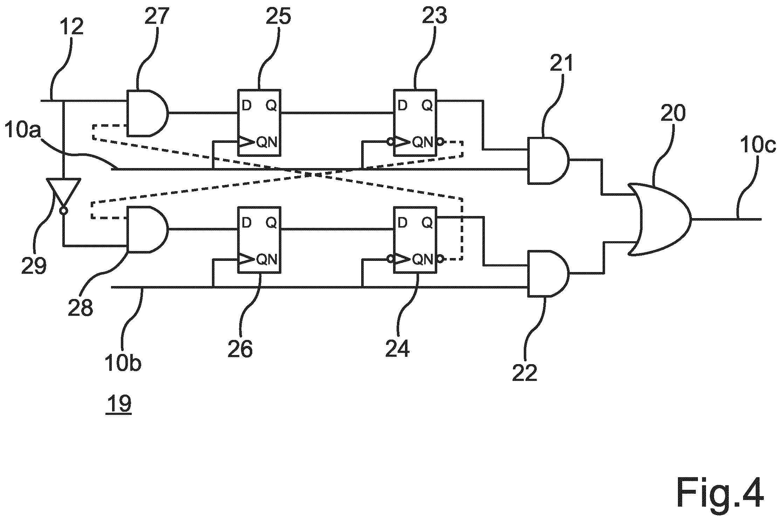

Fig. 4 illustrates an exemplary implementation of the clock switch device 19 within the switching circuit 6. The clock switch device 19 if Fig. 4 is designed to provide glitch-free switching between the first clock line 10a from the first computing unit 4 and the second clock line 10b from the second computing unit 5, ensuring a smooth transition of clock signals to the third clock line 10c connected to the memory device 7.

The clock switch device 19 comprises a first AND gate 27 with a first input connected to the control line 12 and a second input connected to an inverted output of a fourth flip-flop 24 of the clock switch device 19. The clock switch device 19 comprises a second AND gate 28 with a first input connected to an output of an inverter 29 of the clock switch device 19, wherein the input of the inverter 29 is connected to the control line 12. A second input of the second AND gate 28 is connected to an inverted output of a third flip-flop 23 of the clock switch device 19. The clock switch device 19 comprises a first flip-flop 25, whose data input is connected to the output of the first AND gate 27 and whose clock input is connected to the first clock line 10a. A non-inverted output of the first flip-flop 25 is connected to a data input of the third flip-flop 23 and an inverted clock input of the third flip-flop 23 is connected to the first clock line 10a. The clock switch device 19 comprises a second flip-flop 26, whose data input is connected to the output of the second AND gate 28 and whose clock input is connected to the second clock line 10b. A non-inverted output of the second flip-flop 26 is connected to a data input of the fourth flip-flop 24 and an inverted clock input of the fourth flip-flop 24 is connected to the second clock line 10b. The clock switch device 19 comprises a third AND gate 21 with a first input connected to a non-inverted output of the third flip-flop 23 and a second input connected to the first clock line 10a. The clock switch device 19 comprises a fourth AND gate 22 with a first input connected to a non-inverted output of the fourth flip-flop 24 and a second input connected to the second clock line 10b. Furthermore, the clock switch device 19 comprises an OR gate 20 with a first input connected to an output of the third AND gate 21 and a second input connected to an output of the fourth AND gate 22. An output of the OR gate 20 is connected to the third clock line 10c. These components work together to implement a glitch-free switching mechanism.

The glitch-free operation of the clock switch device 19 is particularly beneficial when switching between asynchronous clock domains, as may be the case with the first computing unit 4 and the second computing unit 5. This design ensures that the memory device 7 receives a clean and stable clock signal, regardless of which computing unit is currently granted access by the switching circuit 6.

## Claims

1. Electronic control unit (3) for a vehicle (1) comprising a first computing unit (4), a second computing unit (5), a memory device (7), and a switching circuit (6), which is connected to the first computing unit (4), to the second computing unit (5) and to the memory device (7), wherein
- the first computing unit (4) is configured to carry out a first boot-up process and the switching circuit (6) is configured to grant the first computing unit (4) access to the memory device (7) during the first boot-up process; and
- the first computing unit (4) is configured to control the switching circuit (6) to grant the second computing unit (5) access to the memory device (7) when the first boot-up process is finished.

2. Electronic control unit (3) according to claim 1, wherein the memory device (7) comprises or consists of a flash memory device (7).

3. Electronic control unit (3) according to claim 2, wherein the flash memory device (7) comprises or consists of an embedded multimedia card, eMMC, device.

4. Electronic control unit (3) according to one of the preceding claims, wherein the second computing unit (5) is configured to carry out a second boot-up process when the switching circuit (6) grants the second computing unit (5) access to the memory device (7).

5. Electronic control unit (3) according to one of the preceding claims, wherein
- the second computing unit (5) is configured to transmit an access request signal to the first computing unit (4); and
- the first computing unit (4) is configured to control the switching circuit (6) to grant the second computing unit (5) access to the memory device (7) in response to the access request signal.

6. Electronic control unit (3) according to one of the preceding claims, wherein
- the first computing unit (4) is configured to transmit a release request signal to the second computing unit (5) while the switching circuit (6) grants the second computing unit (5) access to the memory device (7);
- the second computing unit (5) is configured to transmit a release response signal to the first computing unit (4) in response to the release request signal; and
- the first computing unit (4) is configured to control the switching circuit (6) to grant the first computing unit (4) access to the memory device (7) in response to the release response signal.

7. Electronic control unit (3) according to one of the preceding claims, wherein
- the first computing unit (4) is configured to transmit a control signal to the switching circuit (6); and
- the switching circuit (6) is configured to arbitrate access to the memory device (7) between the first computing unit (4) and the second computing unit (5) depending on the control signal.

8. Electronic control unit (3) according to claim 7, wherein
- the switching circuit (6) comprises a first data terminal connected to a data terminal of the first computing unit (4), a second data terminal connected to a data terminal of the second computing unit (5), and a data switch device (17), which is configured to arbitrate access to the memory device (7) between the first data terminal and the second data terminal depending on the control signal; and/or
- the switching circuit (6) comprises a first command terminal connected to a command terminal of the first computing unit (4), a second command terminal connected to a command terminal of the second computing unit (5), and command switch device (18), which is configured to arbitrate access to the memory device (7) between the first command terminal and the second command terminal depending on the control signal.

9. Electronic control unit (3) according to one of claims 7 or 8, wherein the switching circuit (6) comprises a first clock terminal connected to a clock terminal of the first computing unit (4), a second clock terminal connected to a clock terminal of the second computing unit (5), and a clock switch device (19), which is configured to arbitrate access to the memory device (7) between the first clock terminal and the second clock terminal depending on the control signal.

10. Electronic control unit (3) according to claim 9, wherein the clock switch device (19) is a glitch-free switch device.

11. Electronic control unit (3) according to one of the preceding claims, wherein the first computing unit (4) comprises or consists of a first system-on-a-chip and/or the second computing unit (5) comprises or consists of a second system-on-a-chip.

12. Electronic control unit (3) according to one of the preceding claims, wherein
- the switching circuit (6) consists of discrete logic circuitry; or
- the switching circuit (6) comprises or consists of at least one field-programmable gate array, FPGA, and/or the switching circuit (6) comprises or consists of at least one complex programmable logic device, CPLD.

13. Electronic vehicle guidance system for a vehicle (1) comprising an electronic control unit (3) according to one of the preceding claims, wherein the first computing unit (4) and/or the second computing unit (5) is configured to generate
- at least one control signal for guiding the vehicle (1) at least in part automatically; and/or
- driver assistance information for assisting a driver of the vehicle (1) at guiding the vehicle (1).

14. Sensor system (2) for a vehicle (1) comprising an electronic control unit (3) according to one of the preceding claims and at least one sensor device (30) for the vehicle (1), wherein the first computing unit (4) and/or the second computing unit (5) is configured to control the at least one sensor device and/or to process sensor data generated by the at least one sensor device (30).

15. Method for operating an electronic control unit (3) of a vehicle (1), wherein
- a first computing unit (4) of the electronic control unit (3) is booted up, wherein a switching circuit (6) of the electronic control unit (3) is used to grant the first computing unit (4) access to a memory device (7) of the electronic control unit (3) during the booting-up; and
- the switching circuit (6) is controlled by the first computing unit (4) to grant the second computing unit (5) access to the memory device (7) when the booting-up is finished.
